# EUROPEAN PATENT APPLICATION

(11) **EP 4 718 588 A1**
(43) Date of publication of application: **01.04.2026**
(21) Application number: 24178273.9
(22) Date of filing: 27.05.2024
(51) Int. Cl.: H01M 10/658, H01M 50/211, H01M 50/291, H01M 50/293, H01M 50/505, H01M 50/516

(54) **BATTERY ASSEMBLY AND AIRCRAFT COMPRISING THE ASSEMBLY**

(71) Applicant: Lilium GmbH, 82131 Gauting (DE)
(72) Inventor: Hirsch, Christian, 82234 Wessling (DE); Eeckeleers, Laurent, 82234 Wessling (DE); Mathew, Suraj Kiron, 82234 Wessling (DE); Sobczak, Pawel, 82234 Wessling (DE)
(74) Representative: Ter Meer Steinmeister & Partner

(57) **Abstract**

The present invention relates to a battery assembly (10), comprising a battery cell stack (12) with a plurality of battery cells (12a) with respective electrode tabs (14), wherein the battery cells (12a) are stacked and electrically interconnected via their electrode tabs (14) along a stacking direction (S), and a housing with a top and a base plate, between which the battery cell stack (12) is compressed, and structural enclosure walls (16), wherein at least one barrier element (18) is included in the battery cell stack (12) between a pair of neighbouring battery cells (12a) for dividing the battery cell stack (12) into a plurality of sealed cell modules (20a. 20b), wherein the at least one barrier element (18) comprises at least one stud element (22), which extends through an opening (16a) in a first of the structural enclosure walls (16) and is fixed to the first enclosure wall (16) by means of a counter element (22a), wherein between the at least one barrier element (18) and the first enclosure wall (16), a busbar assembly (24) is provided for electrically inter-connecting the neighbouring cell modules (12a), wherein by means of the barrier element (18), the first enclosure wall (16), the busbar assembly (24) and an insulating sealing layer (26) arranged between the busbar assembly (24) and the first enclosure wall (26), a hermetic sealing of the neighbouring cell modules (20a, 20b) is provided.

## Description

The present invention relates to a battery assembly comprising a battery cell stack with a plurality of battery cells stacked and electrically interconnected along a stacking direction inside a housing and an aircraft comprising at least one such battery assembly.

In recent times, the development of electrochemical power storage units in the form of battery assemblies has made steady progress, for example in the context of an increased number of electrically driven vehicles produced and also the prospect of high-capacity electrical power storage facilities for balancing the electrical grid.

While in particular for battery assemblies used in vehicles, a maximum electrical storage density and thus reduced weight and form factors are desirable, one additional aspect that always has to be observed when designing and manufacturing high-capacity and high-power battery assemblies are safety concerns. Due to the high amount of energy stored in such battery assemblies and also due to the of-tentimes reactive nature of the chemicals used in such battery assemblies, even small points of failure in single modules comprised in larger battery assemblies may lead to catastrophic and uncontrollable thermal runaway events.

In particular in use cases with increased safety demands, such as electrical propulsion aircraft, such safety concerns are even more pronounced than for example in electrical propulsion cars since in case of emergency it is not easily possible to simply abandon the corresponding aircraft in case of a thermal runaway event. Thus, sophisticated measures have to be taken in the battery assemblies of electrically driven aircraft in order to ensure that a singular failure of an individual battery cell can be contained within a small and isolated volume and will not propagate to neighbouring modules.

For this purpose, it has been proposed to form battery cell stacks within respective battery assemblies, in which between pairs of neighbouring battery cells thermal barrier elements are provided which together with the surrounding housing are able to form hermetically sealed cell modules within the battery assembly. Such cell modules may for example comprise six battery cells and dedicated venting measures in order to be able to release combustion gases in case of thermal runaway events in a controlled manner. Care also has to be taken that the barrier elements, the housing and the respective connection elements between them are sufficiently resilient to withstand the thermal and mechanical stress of thermal runaway events.

By designing both the housing and the thermal barrier elements between neighbouring battery cells in such a manner that they are capable of resisting the thermal and mechanical stress of a thermal runaway event within a corresponding cell module, it is possible to avoid any propagation of heat and combustion gases beyond the affected cell module in order to protect neighbouring cell modules, while the combustion gases in turn can be led out of the housing of the battery assembly in a controlled manner by means of dedicated burst discs and ducts serving as venting means.

However, by forming such hermetically isolated cell modules within a battery assembly, new challenges arise. For example, in order to be able to electrically connect the individual battery cells of neighbouring cell modules of a battery cell stack in such a battery assembly, new solutions have to be found for the feedthrough of the corresponding electric connections between the hermitically sealed modules without compromising the sealing. Furthermore, care has to be taken that in the regions of both the thermal barriers and the outer wall of the battery assembly, electrical safety concerning the occurrence of creepage currents and electrical clearing has to be provided.

It is therefore the object of the present invention to provide an improved battery assembly in which hermetically sealed cell modules are provided in order to prevent any propagation of thermal runaway events, while on the other hand high voltage feedthrough within the corresponding battery cell stack is achieved between neighbouring cell modules in a save and reliable manner in the region of said thermal barrier elements.

For this purpose and in order to solve the above discussed problems, the battery assembly according to the present invention comprises a battery cell stack with a plurality of battery cells with respective electrode tabs, wherein the battery cells are stacked and electrically interconnected via their electrode tabs along a stacking direction, and a housing with a top and a base plate, between which the battery cell stack is compressed, and structural enclosure walls, wherein at least one barrier element is included in the battery cell stack between a pair of neighbouring battery cells for dividing the battery cell stack into a plurality of sealed cell modules, wherein the at least one barrier element comprises at least one stud element, which extends through an opening in a first of the structural enclosure walls and is fixed to the first enclosure wall by means of a counter element, wherein between the at least one barrier element and the first enclosure wall, a busbar assembly is provided for electrically interconnecting the neighbouring cell modules, wherein by means of the barrier element, the first enclosure wall, the busbar assembly and an insulating sealing layer arranged between the busbar assembly and the first enclosure wall, hermetic sealing of the neighbouring cells is provided.

Thus, by providing the at least one stud element extending through an opening in one of the structural enclosure walls of the battery assembly, mechanical stability of the battery assembly as a whole can be improved while by additionally providing the busbar assembly and the insulating sealing layer, both the desired hermetic sealing of the neighbouring cell modules is achieved and a high voltage feedthrough between the neighbouring cell modules is provided.

In order to improve mechanical integrity and electric isolation in the interfacing region between the barrier element and the first enclosure wall, the busbar assembly may comprise a busbar holder made from an electrically insulating, high-temperature resistant material, preferably FR4, attached to the barrier element, and a busbar made from a conductive material provided on the busbar holder on the side facing the first enclosure wall.

Therein, the busbar may be made from the same material as the electrode tabs of the neighbouring battery cells, and/or of copper or a copper alloy, in order to facilitate welding of the neighbouring electrode tabs to the busbar for achieving electrical connection between neighbouring cell modules. However, in alternative embodiments, the busbar may also be formed of other metals or metal alloys such as alum inium or alloys thereof.

As already discussed above, while providing the at least one stud element at the at least one barrier element allows for improving mechanical stability by means of fixing the corresponding barrier element to the respective enclosure wall, the position of the stud in the vicinity of the electrical interface in form of the busbar assembly leads to new challenges for the electrically save design of said interface. One particularly preferred embodiment which both achieves good mechanical stability of the stud element as well as the connection between the barrier element and the enclosure wall and also guarantees electric isolation of said components can be formed such that the stud element may comprise a stud core made from a conductive material, in particular a metal such as titanium or a titanium alloy, and a stud sleeve made from an insulating material, surrounding the stud core at least in the region of the busbar assembly. Thus, the stud core made from a robust and in particular metallic material provides for the desired mechanical strength, while the additional stud sleeve guarantees electrical isolation between the stud core and the busbar.

In a further development of said embodiment, the stud sleeve may be made in one piece with the busbar holder, such that the busbar holder in its configuration mounted to the barrier element comprises the stud sleeve extending towards the respective enclosure wall through which the stud core in inserted, while the busbar itself extends around the stud sleeve in an electrically isolated manner.

In particular, the stud sleeve may extend from the barrier element to the first structural enclosure wall and may be in mechanical contact with both, such that at this point the distribution and propagation of forces between the enclosure wall and the barrier element becomes possible.

In order to achieve the desired mechanical properties of the battery assembly according to the present invention in a uniform manner, the at least one barrier element may comprise at least one stud element on each of its four sides. Correspondingly, each of said at least four stud elements will then be fixed to their respective enclosure wall by means of a counter element, wherein all of said stud elements and counter elements may be formed in an identical manner, or alternatively the stud element extending on the side of the busbar assembly may be formed differently, for example may be the only stud element formed as described above with a stud element extending through an electrically insulating stud sleeve.

While it is the main task of the at least one barrier element to prevent a propagation of thermal runaway events between neighbouring cell modules and to provide mechanical strength both in normal and thermal runaway conditions of the battery assembly, it is furthermore desirable to form said barrier element as light and as thin as possible in order to be able to maximise the overall power storage density of the battery assembly as a whole.

For this purpose, the at least one barrier element may be formed as a composite structure comprising a central structural layer with the at least one stud element integrated therewith, thermal insulation layers on both sides of the central layer and abrasion protection layers on the outer sides of the thermal insulation layers, wherein the thermal insulation layers are preferably made from a compressible material. In such embodiments, the central structural layer provides the desired mechanical strength for the barrier element, in particular in cooperation with the integrated studs and their connection to the structural enclosure walls of the battery assembly, while the thermal insulation layers and abrasion protection layers protect the barrier element from heat and mechanical abrasion in order to ensure their intended operation during the entire lifetime of the corresponding battery assembly.

Furthermore, the first enclosure wall in the region of the at least one barrier element may be formed with a stinger section bulging towards the busbar assembly. Said stinger section facilitates the mechanical connection of the barrier element to the enclosure wall and allows for a located compression of the corresponding components in order to guarantee the hermetic sealing of the neighbouring cell modules.

In order to avoid any electrical discharges or the occurrence of creeping currents in the region of the stinger section and the busbar assembly as well as between the busbar assembly and the enclosure as a whole, the insulating sealing layer may comprise a wedge-shaped section which is wedged between the stinger section of the first enclosure wall and the stud element of the barrier element, in which region electrically conducting components are positioned at a small distance and measures have to be taken to prevent any electrical current between them.

While the insulating sealing layer may be externally produced in advance and put in place between the busbar assembly and the first enclosure wall during manufacturing of the battery assembly, in a preferred embodiment, the insulating sealing layer may be produced in place by means of a wet sealing process, i.e. may be moulded and hardened in its intended position in order to facilitate its positioning within the battery assembly under spatial constraints and to ensure the desired fitting properties of the insulating sealing layer in its place.

While up to this point, only the electrical interconnection between the neighbouring cell modules of the battery assembly according to the present invention has been discussed, an additional cell measurement harness may also be provided in the battery assembly according to the present invention extending along the stacking direction of the battery cell stack. Said cell measurement harness can for example be positioned at a horizontal distance from the stud element discussed above in the vicinity of the busbar assembly and may be adapted for the transmission of measurement data concerning the charge and health status of the individual battery cells of the battery cell stack.

While different designs and layouts of the thermal barrier element are conceivable, they may in particular comprise a thickness of between 4 and 5 millimetres, preferably about 4.8 mm, which represents an optimal compromise between mechanical and thermal properties and weight and volume.

According to a second aspect, the present invention relates to an aircraft, in particular an electrical propulsion VTOL aircraft, comprising at least one battery assembly according to the present invention as discussed above.

Further features and advantages of the present invention will become even clearer from the following description of an embodiment thereof when considered together with the accompanying figures. These figures show in particular:
- Fig. 1: a cross section view of a part of a battery assembly according to the present invention;
- Fig. 2a and 2b: respective isometric section views of the battery assembly of Fig. 1;
- Fig. 3: a detailed view of the barrier element and the busbar assem-bly of the battery assembly of Fig. 1;
- Fig. 4: a partial front view of the battery assembly of the preceding figures; and
- Fig. 5: a schematic view of an electrical propulsion VTOL aircraft comprising a plurality of battery assemblies as shown in the previous figures.

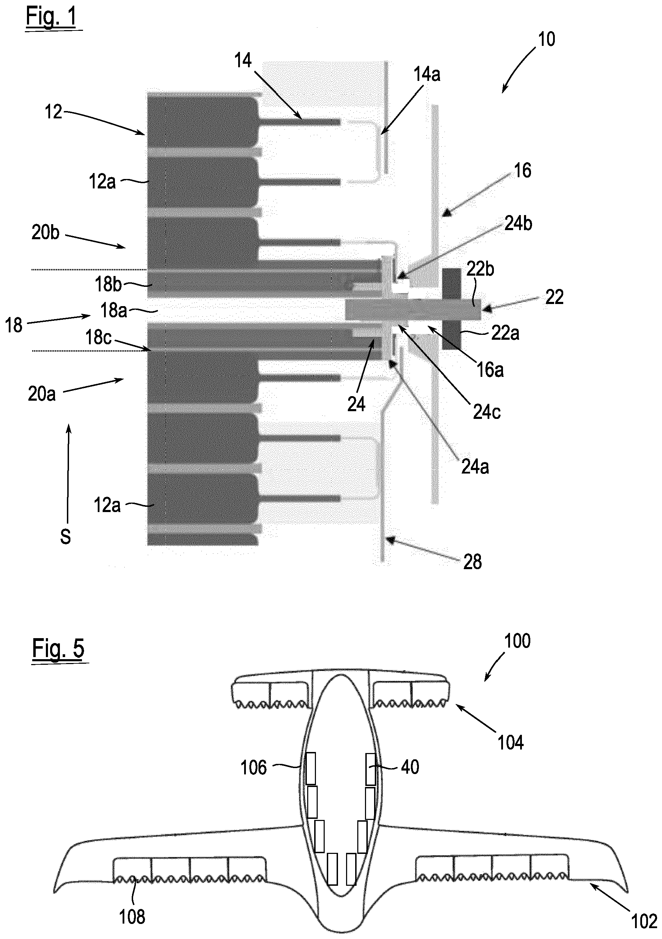

In Fig. 1, a part of a battery assembly according to the present invention is shown in a schematic cross-sectional view and generally denoted with reference numeral 10. Therein, the cross section is taken along a stacking direction S of the battery cell stack 12 of the battery assembly 10 which in turn comprises a plurality of battery cells 12a of a pouch type.

Said battery cells 12a comprise respective electrode tabs 14 which extend toward a first structural enclosure wall 16 which forms part of a housing of the battery assembly 10 which is not further shown in the present figures but in any case in addition to the enclosure wall also comprises a top and a base plate, between which the battery cell 12 is compressed, and for such structural enclosure walls. The first structural wall 16 may for example be referred to as the front wall of the enclosure of the battery assembly.

The battery cells 12a as already mentioned are stacked along the stacking direction S and are electrically interconnected via their electrode tabs 14 by means of tab connection elements 14a which are welded to corresponding pairs of electrode tabs 14 such that the battery cells 12a of the battery cell stack 12 are connected in series for providing high voltage to external electric loads.

Between one of the neighbouring pairs of battery cells 12a shown in Fig. 1, a barrier element 18 is included in the battery cell stack 12 for dividing the battery cell stack 12 into two sealed cell modules 20a and 20b, each for example comprising six battery cells 12a. It shall be pointed out that battery cell stacks 12 in such battery assemblies 10 typically comprise several dozens of battery cells 12a, such that a corresponding number of barrier elements 18 would have to be provided, even though only a single one is shown in the present figures.

In the present embodiment, the single shown barrier element 18 is formed as a composite structure comprising a central structural layer 18a, thermal insulation layers 18b on both sides of the central layer 18a and abrasion protection layers 18c on the outer sides of the thermal insulation layers 18b.

Integrated with the central structural layer 18a of the barrier element 18 is provided a stud element 22, which extends through an opening 16a in the first structural enclosure wall 16 and is fixed to the first enclosure wall 16 by means of a counter element 22a positioned outside the first enclosure wall 16, for example by screwing onto an external thread provided on the stud element 22.

In order to be able to electrically interconnect the two neighbouring battery cells 12a between which the barrier element 18 is positioned, additionally attached to the barrier element 18 a busbar assembly 24 is provided which is made of two parts, a busbar holder 24a made from an electrically insulating material and a busbar 24b made from a conductive material provided on the busbar holder 24a on the side facing the first of enclosure walls 16.

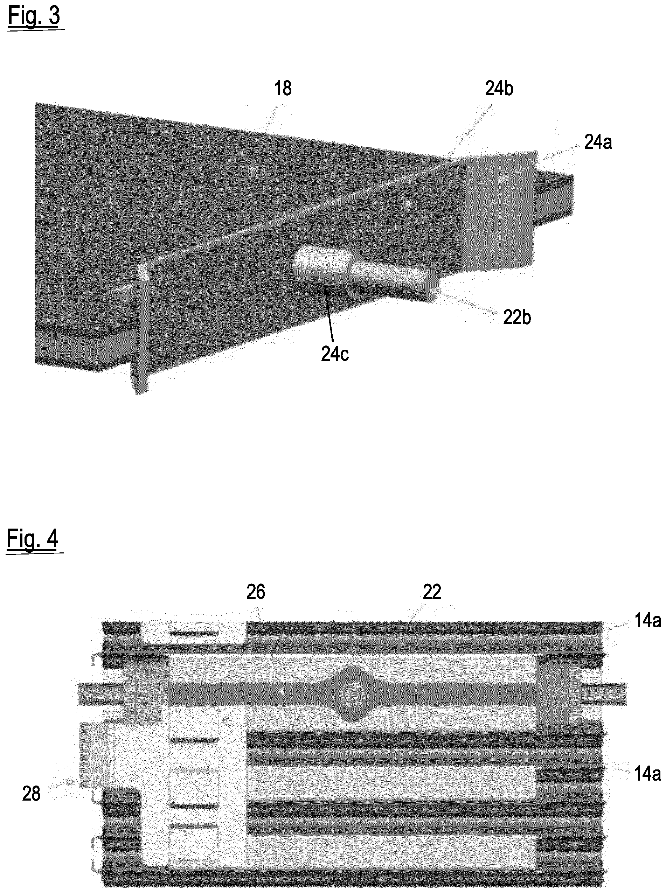

It should further be pointed out that the busbar holder 24a in a single piece also comprises a stud sleeve 24c which extends from the barrier element towards the first enclosure wall 16 and preferably is in mechanical contact with both of them. As can in particular be seen in Fig. 3, the busbar 24b extends around the stud sleeve 24c, through which a stud core 22b of the stud element 22 is led. Said stud core 22b is made of a material with high mechanical strength, such as titanium or a titanium alloy, which may also be electrically conductive. Thus, electrical isolation is achieved between the thermal barrier 18, the busbar 24b and the stud core 22 by means of the busbar holder 24a and its integral stud sleeve 24c and it is possible to connect the neighbouring battery cells 12a on both sides of the barrier element 18 by means of the busbar 24b. For this purpose, the busbar 24b may be made from the same material as the as the electrode tabs 14 of the neighbouring battery cells 12a in order to facilitate welding therebetween.

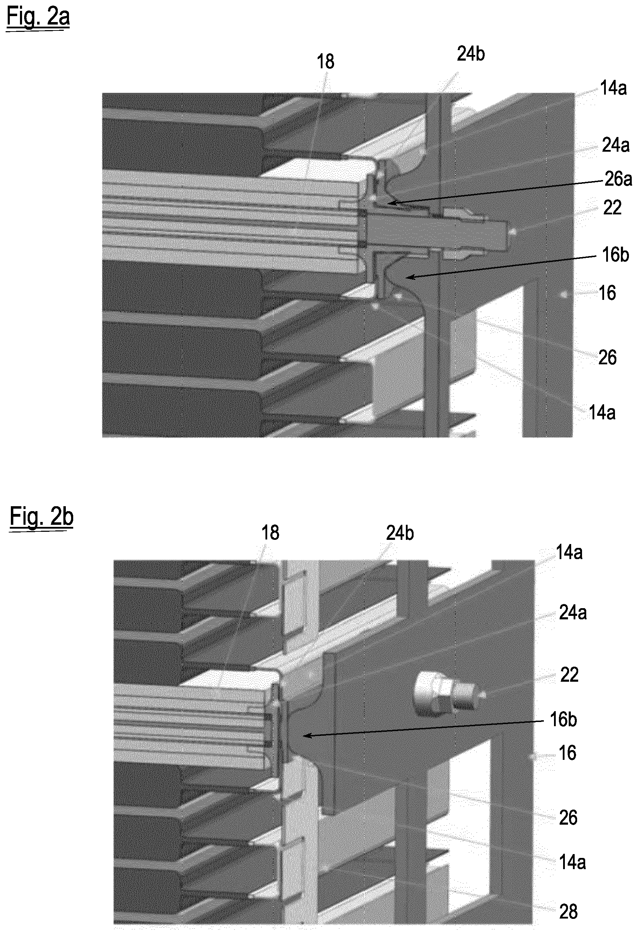

As can in particular be seen from figures 2a and 2b, an additional insulating sealing layer 26 is arranged between the busbar assembly 24 and the first enclosure wall 16 such that by means of the first enclosure wall 16, the insulating sealing layer 26, the busbar assembly 24 and the barrier element 18, a hermetic sealing is achieved between the neighbouring cell modules 20a and 20b. Therein, the stud element 22 provides additional resilience to said hermetic sealing and increased mechanical stability also in case of a thermal runaway event in one of the cell modules 20a and 20b with its resulting increased pressure, temperature and possibly corrosive combustion gases.

It shall furthermore be pointed out that the first enclosure wall 16 in the region of the barrier element 18 is formed with a stinger section 16b bulging towards the busbar assembly 24, and that the insulating sealing layer 26 comprises a wedge shaped section 26a between the stinger section 16b of the first enclosure wall 16 and the stud element 22 of the barrier element 18 in order to avoid any electrical discharge or occurrence of creeping currents.

In particular in Fig. 4, it can be seen that the battery assembly 10 further comprises a cell measurement harness 28 which also extends along the stacking direction S of the battery cell stack 12 and which is positioned at a horizontal distance from the stud 22 for transmitting information on the status and health of the individual battery cell 12a of the battery cell stack 12 to a battery management system not shown in the present figures.

Lastly, figure 5 in plan view shows an electrical propulsion VTOL aircraft 100 according to the present invention comprising two pairs of wings 102, 104 and a fuselage 106. Attached to the wings 102, 104 are provided a plurality of electrically driven propulsion motors 108, which are rotatable between a plurality of operating orientations around axes substantially extending along the span direction of the wings 102, 104. The electrically driven propulsion motors 108 are powered by a plurality of battery assemblies 40 as described above which are positioned within the fuselage 106 of the aircraft 100 and connected for providing electrical power to the motors 108 during their operation.

## Claims

1. Battery assembly (10), comprising:
- a battery cell stack (12) with a plurality of battery cells (12a) with respective electrode tabs (14), wherein the battery cells (12a) are stacked and electrically interconnected via their electrode tabs (14) along a stacking direction (S); and
- a housing with a top and a base plate, between which the battery cell stack (12) is compressed, and structural enclosure walls (16);
wherein at least one barrier element (18) is included in the battery cell stack (12) between a pair of neighbouring battery cells (12a) for dividing the battery cell stack (12) into a plurality of sealed cell modules (20a. 20b);
wherein the at least one barrier element (18) comprises at least one stud element (22), which extends through an opening (16a) in a first of the structural enclosure walls (16) and is fixed to the first enclosure wall (16) by means of a counter element (22a);
wherein between the at least one barrier element (18) and the first enclosure wall (16), a busbar assembly (24) is provided for electrically interconnecting the neighbouring cell modules (12a);
wherein by means of the barrier element (18), the first enclosure wall (16), the busbar assembly (24) and an insulating sealing layer (26) arranged between the busbar assembly (24) and the first enclosure wall (26), a hermetic sealing of the neighbouring cell modules (20a, 20b) is provided.

2. Battery assembly (10) according to claim 1,
wherein the busbar assembly (24) comprises a busbar holder (24a) made from an electrically insulating, high-temperature resistant material, preferably FR4, attached to the barrier element (18) and a busbar (24b) made from a conductive material provided on the busbar holder (24) on the side facing the first enclosure wall (16).

3. Battery assembly (10) according to claim 2,
wherein the busbar (24b) is made from the same material as the electrode tabs (14) of the neighbouring battery cells (12a) and/or of copper or a copper alloy.

4. Battery assembly (10) according to any of the preceding claims,
wherein the connection between the electrode tabs (14) of the neighbouring battery cells (12a) and the busbar assembly (24) is provided by welding.

5. Battery assembly (10) according to any of the preceding claims,
wherein the stud element (22) comprises a stud core (22b) made from conductive material, in particular metal such as titanium or a titanium alloy, and a stud sleeve (24c) made from an insulating material, surrounding the stud core (22b) at least in the region of the busbar assembly (24).

6. Battery assembly (20) according to any of claims 2 to 4 and claim 5, wherein the stud sleeve (24c) is made in one piece with the busbar holder (24a).

7. Battery assembly (20) according to any of claims 5 and 6,
wherein the stud sleeve (24c) extends from the barrier element (18) to the first enclosure wall (16) and preferably is in mechanical contact with both.

8. Battery assembly (10) according to any of the preceding claims,
wherein the at least one barrier element (18) comprises at least one stud element (22) on each of its four sides.

9. Battery assembly (10) according to any of the preceding claims,
wherein the at least one barrier element (18) is formed as a composite structure comprising a central structural layer (18a) with the at least one stud element (22) integrated therewith, thermal insulation layers (18b) on both sides of the central layer (18a) and abrasion protection layers (18c) on the outer sides of the thermal insulation layers (18b), wherein the thermal insulation layers (18b) are preferably made from a compressible material.

10. Battery assembly (10) according to any of the preceding claims,
wherein the first enclosure wall (16) in the region of the at least barrier element (18) is formed with a stinger section (16b) bulging towards the busbar assembly (24).

11. Battery assembly (10) according to the preceding claim,
wherein the insulating sealing layer (26) comprises a wedge-shaped section (26a) which is wedged between the stinger section (16b) of the first enclosure wall (16) and the stud element (22) of the barrier element (18).

12. Battery assembly (10) according to any of claims 1 to 9,
wherein the insulating sealing layer (26) is produced in place by means of a wet sealing process.

13. Battery assembly (10) according to any of the preceding claims,
further comprising a cell measurement harness (28) extending along the stacking direction (S) of the battery cell stack (12).

14. Battery assembly (10) according to any of the preceding claims, wherein the at least one thermal barrier element (18) comprises a thickness of between 4 and 5 mm, preferably about 4.8 mm.

15. Aircraft (100), in particular electrical propulsion VTOL aircraft, comprising at least one battery assembly (10) according to any of the preceding claims.
